# EUROPÄISCHE PATENTSCHRIFT

(11) **EP 2 818 360 B1**
(45) Veröffentlichungstag und Bekanntmachung des Hinweises auf die Patenterteilung: **07.12.2016**
(21) Anmeldenummer: 14173322.0
(22) Anmeldetag: 20.06.2014
(51) Int. Cl.: B60N 2/22, B60N 2/48

(54) **FAHRZEUGSITZ UND NUTZKRAFTFAHRZEUG MIT WENIGSTENS EINEM FAHRZEUGSITZ**
VEHICLE SEAT AND COMMERCIAL MOTOR VEHICLE WITH AT LEAST ONE VEHICLE SEAT
SIÈGE DE VÉHICULE ET VÉHICULE UTILITAIRE ÉQUIPÉ D'AU MOINS UN SIÈGE DE VÉHICULE

(30) Priorität: 26.06.2013 DE 102013106721
(43) Veröffentlichungstag der Anmeldung: 31.12.2014
(73) Patentinhaber: GRAMMER AG, 92224 Amberg (DE)
(72) Erfinder: Schneider, Franz, 92263 Ebermannsdorf (DE)
(74) Vertreter: Hannke, Christian

(56) Entgegenhaltungen:
- EP-A1- 2 599 659
- DE-B3-102004 052 604
- FR-A1- 2 932 429

## Beschreibung

Die Erfindung betrifft einen Fahrzeugsitz mit einem Sitzteil, mit einer Rückenlehne und mit einer Lagereinrichtung zum Lagern eines Rückenlehnenverlängerungsteils, insbesondere eines Rückenlehnenoberteils, gegenüber einem Rückenlehnenunterteil des Fahrzeugsitzes.

Die Erfindung betrifft außerdem ein Nutzkraftfahrzeug, insbesondere ein landwirtschaftliches Nutzkraftfahrzeug, mit wenigstens einem Fahrzeugsitz.

Gattungsgemäße Fahrzeugsitze, insbesondere für Nutzkraftfahrzeuge und speziell für landwirtschaftliche Nutzkraftfahrzeuge, sind aus dem Stand der Technik vielfältig und gut bekannt. Es ist hierbei auch bekannt, die Rückenlehnen derartiger Fahrzeugsitze hinsichtlich ihrer Längserstreckung in ein Rückenlehnenunterteil, welches sich direkt oberhalb des Sitzteils im hinteren Bereich des Sitzteils befindet, und in ein Rückenlehnenoberteil, welches das Rückenlehnenunterteil der Rückenlehne in Längserstreckung der Rückenlehne verlängert, zu unterteilen. Hierdurch soll die Flexibilität des Fahrzeugsitzes speziell hinsichtlich seiner Rückenlehne erhöht werden.

So ist beispielsweise aus der Offenlegungsschrift DE 30 46 049 A1 ein Fahrzeugsitz bekannt, bei welchem die Rückenlehne zumindest zweigeteilt ist, um einem Fahrzeugführer bei einer seitlich oder rückwärtig ausgerichteten Sitzarbeitshaltung einen bedientechnisch erleichterten Zugang zu rückwärtig angeordneten Bedienorganen oder auch nur optisch einen rückwärtigen Arbeitsbereich hinter einem Fahrersitz besser einsehen bzw. beobachten lassen zu können. Dementsprechend verfügt diese dort offenbarte Rückenlehne über ein oberes Rückenlehnenteil und ein unteres Rückenlehnenteil, wobei zumindest das obere Rückenlehnenteil um eine vertikale Achse verschwenkbar ist. Hierdurch gelingt es, dass der Fahrer sich jederzeit mit seinem oberen Rumpfbereich bzw. Oberkörper drehen kann, um beispielsweise die hinter dem Fahrzeugsitz liegenden Bedienorgane besser erreichen zu können, da das obere Rückenlehnenteil mittels des oberen Rumpfbereichs bzw. Oberkörpers bequem um diese vertikale Achse gedreht werden kann. Hierdurch kann das obere Rückenlehnenteil zumindest teilweise aus ein em über dem unteren Rückenlehnenteil befindlichen Bereich soweit weg gedreht werden, dass der Fahrzeugführer hierdurch über das untere Rückenlehnenteil hinweg problemlos nach hinten greifen kann, um den hinter dem Fahrzeugsitz liegenden Arbeitsbereich besser händisch erreichen zu können. Nachteilig hierbei ist es jedoch, dass das um die vertikale Achse drehbare obere Rückenlehnenteil aufgrund seiner Drehfunktion nur noch bedingt zur Abstützung des Oberkörpers des Fahrzeugführers zur Verfügung steht.

Ein gattungsgemässer Fahrzeugsitz ist aus der FR2932429 bekannt.

Es ist daher Aufgabe vorliegender Erfindung, einen gattungsgemäßen Fahrzeugsitz dahingehend weiterzuentwickeln, dass das obere Rückenlehnenteil gegenüber dem unteren Rückenlehnenteil durch eine andere Lagereinrichtung zum einen derart gelagert werden kann, dass das obere Rückenlehnenteil eine erweiterte Stützfunktion für den Fahrzeugführer bietet, wenn dieser eine seitlich oder rückwärtig ausgerichtete Sitzarbeitshaltung auf dem Fahrzeugsitz einnimmt. Zum anderen soll eine einfach bauende und insbesondere montierbare Lagereinrichtung für das obere Rückenlehnenteil geschaffen werden.

Die Aufgabe der Erfindung wird von einem Fahrzeugsitz nach Anspruch 1 gelöst.

Es versteht sich, dass insbesondere derartige Gleitlagerbuchseneinheiten der Gleitlagereinrichtung in nahezu beliebigen konstruktiven Ausgestaltungen hergestellt werden können, um das Rückenlehnenoberteil gegenüber dem Rückenlehnenunterteil entlang von quer zur Rückenlehne angeordneten bzw. verlaufenden Schiebeachsen verlagern zu können.

Erfindungsgemäss sind die Gleitlagerbuchseneinheiten aus identisch bauenden asymmetrischen Gleitbuchsenteilen zusammengefügt, und können daher besonders kostengünstig hergestellt werden, da lediglich nur eine einzige Bauteilkomponente hergestellt und verwendet werden muss, um hieraus eine mehrteilige Gleitlagerbuchseneinheit zusammenfügen zu können.

Besonders vorteilhaft ist es, dass sich die Montage einer derart zusammengesetzten Gleitlagerbuchseneinheit wesentlich vereinfacht, da lediglich hierfür identisch bauende asymmetrische Gleitlagerbuchsenteile verwendet werden.

Insofern sind Montagefehler bei dem Zusammenbauen der Gleitlagerbuchseneinheiten zur Gänze ausgeschlossen, da diese ja nur aus identisch bauenden asymmetrischen Gleitbuchsenteilen besteht. Somit können die Gleitlagerbuchseneinheiten selbst von Personen fehlerfrei zusammengebaut werden, welche hierfür nicht extra geschult werden müssen.

Die Montage der Gleitlagerbuchseneinheiten und damit insgesamt auch der Lagereinrichtung kann weiter wesentlich vereinfacht werden, wenn das jeweilige asymmetrische Gleitlagerbuchsenteil eine bezogen auf die Schiebeachse radial teilweise geöffnete Gleitlagerstruktur aufweist.

Durch diese radial teilweise geöffnete Gleitlagerstruktur ist es möglich, das jeweilige Gleitlagerbuchsenteil bzw. zwei Gleitlagerbuchsenteile einer Gleitlagerbuchseneinheit auf die länglichen Traversenelemente radial zur Schiebeachse aufzustecken, sodass ein axiales Aufschieben der Gleitlagerbuchsenteile auf die länglichen Traversenelemente in Richtung der Schiebeachse nicht zwingend erforderlich ist.

Hierdurch können die länglichen Traversenelemente bereits mit einem Rahmenteil des Rückenlehnenoberteils fest verbunden und somit vormontiert werden, bevor auf den länglichen Traversenelementen die Gleitlagerbuchseneinheiten aufgesteckt werden. Dies vereinfacht den Montagevorgang der Lagereinrichtung und damit auch des Fahrzeugsitzes allgemein ganz erheblich, da die länglichen Traversenelemente hinsichtlich eines optimalen Herstellungsprozesses des Fahrzeugsitzes bereits vor der Montage der Lagereinrichtung mit ihren beiden Endbereichen stoffschlüssig mit dem Rahmenteil des Rückenlehnenoberteils verbunden werden.

Vorzugsweise sind die länglichen Traversenelemente an ihren beiden Enden mit dem Rahmenteil verschweißt.

Bei einer derartigen hergestellten Baueinheit aus Rahmenteil und länglichen Traversenelementen können Gleitlagerbuchseneinheiten bzw. Gleitlagerbuchsenteile hiervon nachträglich axial nicht mehr auf die länglichen Traversenelemente aufgeschoben werden.

Insofern ist es besonders vorteilhaft, wenn das jeweilige asymmetrische Gleitbuchsenteil eine radiale Montageöffnung zum radialen Montieren des Gleitlagerbuchsenteils auf eines der länglichen Traversenelemente aufweist.

Somit ist es ebenfalls vorteilhaft, wenn das jeweilige asymmetrische Gleitlagerbuchsenteil einen Teilbereich einer Gleitlagerstruktur ausgestaltet, welche bezogen auf die Schiebeachse radial teilweise geöffnet ist.

Vorliegend ist das Gleitbuchsenteil derart konstruiert, dass jeweils ein Gleitbuchsenteil nur einen Teilbereich einer Gleitlagerstruktur der Gleitlagerbuchseneinheit ausgestaltet. Insofern ist es vorteilhaft, wenn dieser Teilbereich der Gleitlagerstruktur entsprechend radial teilweise geöffnet ist, um das Gleitbuchsenteil radial auf das längliche Traversenelement aufstecken zu können.

Es versteht sich, dass eine diesbezügliche Montageöffnung bezüglich der Gleitlagerstruktur idealerweise im Betriebszustand der Gleitlagerbuchseneinheit geschlossen ist. Deshalb ist es vorteilhaft, wenn das jeweilige asymmetrische Gleitbuchsenteil einen Teilbereich einer Gleitlagerstruktur der Gleitlagerbuchseneinheit ausgestaltet, welche an ihrem Umfang einerseits eine Gleitlagerstrukturlücke und andererseits ein Lückenfüllelement zum Verschließen einer Gleitlagerstrukturlücke eines mit dem asymmetrischen Gleitbuchsenteil korrespondierenden weiteren asymmetrischen Gleitbuchsenteils einer gemeinsamen Gleitlagerbuchseneinheit aufweist.

Im Sinne der Erfindung bezeichnet die Begrifflichkeit "Gleitlagerstrukturlücke" die zuvor erläuterte radiale Montageöffnung zum radialen Montieren des Gleitlagerbuchsenteils auf das längliche Traversenelement.

Das Lückenfüllelement ist im Sinne der Erfindung ein Gleitlagerstrukturlückenfüllelement zum Verschließen dieser radialen Montageöffnung, sodass die Gleitlagerstruktur der Gleitlagerbuchseneinheit umfangsseitig der Gleitlageröffnung geschlossen ist.

Weisen die identisch bauenden asymmetrischen Gleitbuchsenteile sowohl eine Gleitlagerstrukturlücke als auch ein Lückenfüllelement zum Verschließen einer derartigen Gleitlagerstrukturlücke auf, kann die Gleitlagerbuchseneinheit aus den beiden identisch bauenden asymmetrischen Gleitbuchsenteilen besonders vorteilhaft zusammengesetzt werden.

Idealerweise ist das Lückenfüllelement bezogen auf die Gleitlagerstruktur der Gleitlagerstrukturlücke gegenüberliegend angeordnet, sodass die identisch bauenden asymmetrischen Gleitbuchsenteile lediglich hinsichtlich der Schiebeachse der Gleitlagerbuchseneinheit um 180° verdreht herum zusammengesteckt werden brauchen, um eine umfangsseitig voll geschlossene Gleitlagerstruktur der Gleitlagerbuchseneinheit bereitstellen zu können.

Insofern sieht eine weitere bevorzugte Ausführungsvariante vor, dass das Lückenfüllelement und die Gleitlagerstrukturlücke durch den Durchmesser einer Gleitlageröffnung voneinander beabstandet angeordnet sind.

Damit mit identisch bauenden Gleitlagerbuchseneinheiten, welche erfindungsgemäß aus den identisch bauenden asymmetrischen Gleitbuchsenteilen zusammengebaut sind, idealerweise auch gebogene Schiebeachsen und nicht nur gerade verlaufende Schiebeachsen ausgebildet werden können, ist es vorteilhaft, wenn eine die Gleitlagerstruktur ausbildende Gleitlagerbuchse die Gleitlagerbuchseneinheit schräg durchdringt.

Insofern ist es vorteilhaft, wenn die Schiebeachse die Gleitlagerbuchseneinheit schräg durchdringt.

Um Reibungswiderstände zwischen der Gleitlagerstruktur der Gleitlagerbuchseneinheiten und den länglichen Traversenelementen reduzieren zu können, ist es vorteilhaft, wenn die Gleitlagerstruktur eine Innengleitverzahnung aufweist. Hierdurch ist es möglich, dass die durch die Gleitlagerstruktur ausgebildete Gleitlagerbuchse nicht vollflächig mit den länglichen Traversenelementen wechselwirkt, sondern nur partiell.

Der Aufbau der Gleitlagerbuchseneinheiten gestaltet sich konstruktiv noch einfacher, wenn die Gleitlagerbuchseneinheit aus zwei identisch bauenden asymmetrischen Gleitbuchsenteile zusammengesetzt ist, wobei die Gleitbuchsenteile mit ihren identisch ausgestalteten Seiten aufeinander zu ausgerichtet sind.

Es ist vorteilhaft, wenn das Gleitbuchsenteil ein plattenförmiges Grundkörperelement umfasst, dessen Längenerstreckung und Breitenerstreckung quer zur Schiebeachse der Gleitlagerbuchseneinheit verläuft. Hierdurch kann die Gleitlagerbuchseneinheit in Schieberichtung besonders schmal bauen, sodass der maximal erreichbare Schiebeweg durch die Gleitlagerbuchseneinheit nicht unnötig eingeschränkt ist.

Insofern sieht eine bevorzugte Ausführungsvariante vor, dass das Gleitbuchsenteil ein plattenförmiges Grundkörperelement umfasst, dessen Tiefenerstreckung fluchtend zur Schiebeachse der Gleitlagerbuchseneinheit verläuft. Die Tiefenerstreckung ist hierbei wesentlich geringer als die Längenerstreckung und immer noch geringer als die Breitenerstreckung, welche vorteilhafterweise sich quer zur Schiebeachse der Gleitlagerbuchseneinheit erstrecken.

Demzufolge ist es weiterhin vorteilhaft, wenn die Schiebeachse die Gleitlagerbuchseneinheit schräg zur Tiefengesamterstreckung der Gleitlagerbuchseneinheit verläuft.

Insbesondere wenn zwei längliche Traversenelemente des Rückenlehnenverlängerungsteils nicht genau parallel zueinander verlaufend angeordnet sind, ist es vorteilhaft, wenn wenigstens eine der Gleitlagerbuchseneinheit radial verschieblich zur Schiebeachse in einem Lagersitz der Lagereinrichtung angeordnet ist. Durch diese radiale Verschieblichkeit ist ein Höhenausgleich gegenüber den länglichen Traversenelementen möglich, sodass die konstruktive Vielfältigkeit der Lagereinrichtung zwischen dem Rückenlehnenunterteil der Rückenlehne und dem Rückenlehnenverlängerungsteil der Rückenlehne möglich ist.

Insofern ist es vorteilhaft, wenn wenigstens eine der Gleitlagerbuchseneinheiten lose, aber verdrehsicher, in dem Lagersitz der Lagereinrichtung angeordnet ist.

Der konstruktive Aufwand der Lagereinrichtung kann vorliegend weiter wesentlich verringert werden, wenn zwei eine gemeinsame Schiebeachse formulierende Gleitlagerbuchseneinheiten spiegelverkehrt in Lagersitzen der Lagereinrichtung angeordnet sind. Insbesondere kann hierdurch mit identisch bauenden Gleitlagerbuchseneinheiten eine bogenförmig verlaufende Schiebeachse formuliert werden, sodass das Rückenlehnenverlängerungsteil entlang einer Kurvenbahn quer zur Rückenlehne verschoben werden kann.

Darüber hinaus ist es besonders vorteilhaft, wenn eine radial neben der durch die zwei Gleitlagerbuchseneinheiten formulierte gemeinsame axiale Schiebeachse angeordnete dritte Gleitlagerbuchseneinheit zwischen den zwei Gleitlagerbuchseneinheiten angeordnet ist, welche eine weitere axiale Schiebeachse formuliert. Hierdurch gelingt es, das Rückenlehnenverlängerungsteil mittels mindestens drei Gleitlagerbuchseneinheiten und zwei Schiebeachsen gegenüber dem Rückenlehnenunterteil der Rückenlehne kompakt zu lagern, wodurch eine besonders robust bauende Lagereinrichtung, welche auch höhere Kräfte aufnehmen kann, bereitgestellt werden kann.

Insbesondere wenn die zweite Schiebeachse nicht genau parallel zu der ersten Schiebeachse an dem Rückenlehnenoberteil verläuft, ist es nicht nur möglich, dieses Rückenlehnenverlängerungsteil entlang einer Kurvenbahn quer zur Rückenlehne zu verschieben, sondern darüber hinaus auch noch bei dieser seitlichen Verschiebung um eine fiktive Rotationsachse, welche mit den Schiebeachsen quer zur Rückenlehne verläuft, zu neigen, sodass das Rückenlehnenverlängerungsteil nicht nur seitlich über die Rückenlehne hinaus geschoben werden kann, sondern dabei auch noch nach hinten oder nach vorne in Fahrtrichtung geneigt werden kann.

Der Aufbau der vorliegenden Lagereinrichtung kann weiter vereinfacht werden, wenn eine radial neben einer durch die zwei Gleitlagerbuchseneinheiten formulierten gemeinsamen Schiebeachse angeordnete dritte Gleitlagerbuchseneinheit um 90° verdreht in einem weiteren Lagersitz der Lagereinrichtung angeordnet ist. Insbesondere hierdurch kann mit identischen Gleitlagerbuchseneinheiten eine radiale Verschieblichkeit zur Schiebeachse wenigstens eine der Gleitlagerbuchseneinheiten konstruktiv einfach gelöst werden.

Die Montage von zwei Gleitbuchsenteilen zu einer Gleitlagerbuchseneinheit kann weiter vereinfacht werden, wenn das Gleitbuchsenteil an einer mit einem weiteren Gleitbuchsenteil korrespondierenden Montageseite wenigstens ein Stegelement aufweist, welches zum Ausbilden der Gleitlagerbuchseneinheit in eine Montagebohrung des weiteren Gleitbuchsenteils ersteckbar ist.

Insofern ist es vorteilhaft, wenn das asymmetrische Gleitbuchsenteil sowohl derartige Stegelemente als auch derartige Montagebohrungen aufweist, sodass zwei asymmetrische Gleitbuchsenteile problemlos miteinander zusammengesteckt werden können, um eine kompakt bauende Gleitlagerbuchseneinheit zu erzeugen.

Darüber hinaus kann mit einem derartigen Montagestegelement, welches beim Zusammenfügen der beiden asymmetrischen Gleitbuchsenteile in eine korrespondiere Montagebohrung hineingesteckt wird, die Stabilität der so zusammengesetzten Gleitlagerbuchseneinheit wesentlich erhöht werden.

Die Integrität der Gleitlagerbuchseneinheit kann nochmals deutlich verbessert werden, wenn das Montagestegelement und das Lückenfüllelement an derselben Gleitbuchsenteilseite angeordnet sind, sodass die zwei symmetrischen Gleitbuchsenteile, welche die Gleitlagerbuchseneinheit ausgestalten, einerseits durch ein oder mehrere Montagestegelemente und zusätzlich durch das Lückenfüllelement miteinander verzahnt sind.

Eine so zusammengesetzte Gleitlagerbuchseneinheit braucht dann nur in einen entsprechend ausgeformten Lagersitz der Lagereinrichtung eingesetzt bzw. eingesteckt zu werden, um die beiden asymmetrischen Gleitbuchsenteile unlösbar im Montagezustand der Lagereinrichtung miteinander zu verbinden.

Es versteht sich, dass die identisch bauenden asymmetrischen Gleitbuchsenteile und damit auch die jeweilige hieraus zusammengefügte Gleitlagerbuchseneinheit aus einem nahezu beliebigen Material hergestellt werden können. Herstellungstechnisch besonders einfach ist es, wenn die identisch bauenden asymmetrischen Gleitbuchsenteile aus einem Kunststoff hergestellt sind.

Die Aufgabe der Erfindung wird auch von einem Nutzkraftfahrzeug, insbesondere von einem landwirtschaftlichen Nutzkraftfahrzeug, mit wenigstens einem Fahrzeugsitz gelöst, wobei sich das Nutzkraftfahrzeug bzw. das landwirtschaftliche Nutzkraftfahrzeug durch einen Fahrzeugsitz nach einem der hier offenbarten Merkmale aufweist.

Umfasst das Nutzkraftfahrzeug, insbesondere das landwirtschaftlich genutzte Nutzkraftfahrzeug, den erfindungsgemäßen Fahrzeugsitz, kann speziell für den Fahrzeugführer ein besonders leichtgängig und robust gelagertes Rückenlehnenverlängerungsteil zur Verfügung gestellt werden, wodurch der Fahrzeugsitz wesentlich einfacher zu handhaben ist.

An dieser Stelle sei noch erwähnt, dass das Rückenlehnenverlängerungsteil kumulativ oder alternativ noch ein Kopfstützenteil umfassen kann.

Weitere Vorteile, Ziele und Eigenschaften vorliegender Erfindung werden anhand anliegender Zeichnung und nachfolgender Beschreibung erläutert, in welchen beispielhaft ein die erfindungsgemäß aufgebauten Gleitlagerbuchseneinheiten aufweisender Fahrzeugsitz dargestellt und beschrieben ist. In der Zeichnung zeigen:
- Figur 1: schematisch eine perspektivische Teilansicht eines Fahrzeugsitzes mit einer Lagereinrichtung umfassend identisch bauende asymmetrische Gleitbuchsenteile von Gleitlagerbuchseneinheiten zum linear verschieblichen Lagern von länglichen Traversenelementen eines Rückenlehnenverlängerungsteils;
- Figur 2: schematisch eine Rückansicht der Lagereinrichtung aus der Figur 1;
- Figur 3: schematisch eine Detailansicht der Lagereinrichtung aus den Figuren 1 und 2;
- Figur 4: schematisch eine Detailansicht der asymmetrischen Gleitbuchsenteile einer der Gleitbuchseneinheiten der Lagereinrichtung aus den Figuren 1 bis 3; und
- Figur 5: schematisch eine Detailansicht einer der aus den asymmetrischen Gleitbuchsenteilen zusammengebauten Gleitbuchseneinheiten der Lagereinrichtung aus den Figuren 1 bis 4.

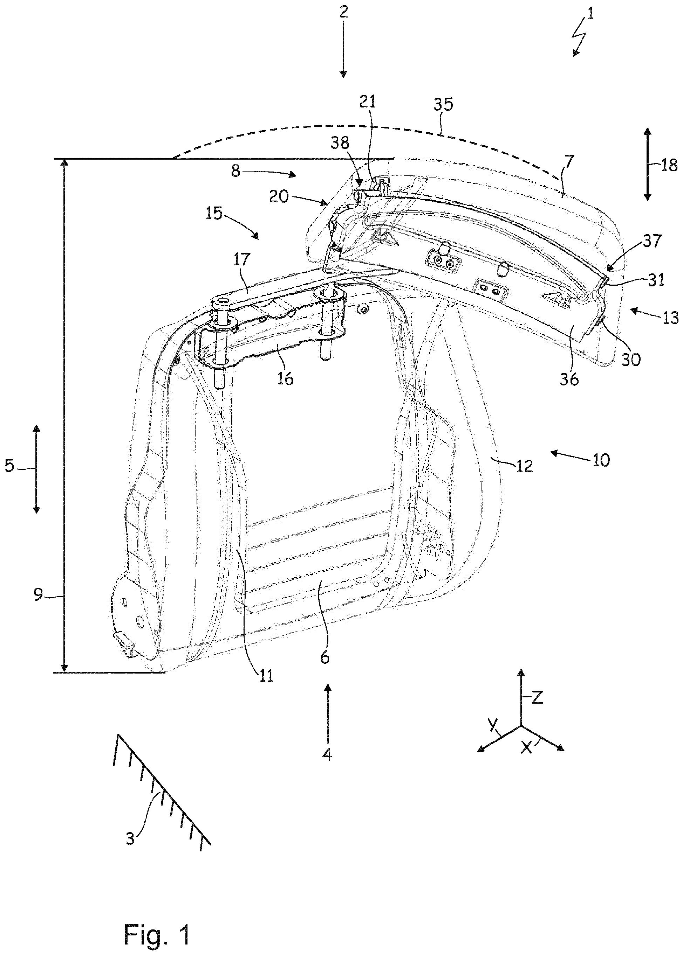

Bei dem in der Figur 1 lediglich teilweise gezeigten Fahrzeugsitz 1 handelt es sich um einen Nutzkraftfahrzeugsitz 2 eines hier nicht näher gezeigten Nutzkraftfahrzeugs 3 mit einer Rückenlehne 4 und mit einem hier nicht gezeigten Sitzteil.

Die Rückenlehne 4 ist hinsichtlich ihrer Längserstreckung 5 in ein Rückenlehnenunterteil 6 und in ein darüber angeordnetes Rückenlehnenoberteil 7 in Gestalt eines Rückenlehnenverlängerungsteils 8 unterteilt.

Insofern gestaltet das Rückenlehnenunterteil 6 in Kombination mit dem Rückenlehnenoberteil 7 die Gesamthöhe 9 der Rückenlehne 4 an dem Fahrzeugsitz 1 aus.

Das Rückenlehnenverlängerungsteil 8 kann bei entsprechender Ausgestaltung der Rückenlehne 4 auch ein Kopfstützenteil (hier nicht gezeigt) umfassen, was in diesem gezeigten Ausführungsbeispiel jedoch nicht der Fall ist.

Dieses landwirtschaftlich genutzte Nutzkraftfahrzeug 3 definiert eine Fahrzeuglängserstreckung X, eine Fahrzeugbreitenerstreckung Y und eine Fahrzeughöhenerstreckung Z, welche auch hinsichtlich der Orientierung des vorliegenden Fahrzeugsitzes 1 verwendet werden.

Insofern kann mithilfe der Fahrzeuglängserstreckung X insbesondere eine Position bzw. Lageveränderung des Rückenlehnenoberteils 7 "vor" bzw. "hinter" bezüglich der Rückenlehne 4 bzw. des Rückenlehnenunterteils 6 definiert werden.

Mithilfe der Fahrzeugbreitenerstreckung Y kann demzufolge eine Position bzw. Lageveränderung des Rückenlehnenverlängerungsteils 8 bzw. des Rückenlehnenoberteils 7 "seitlich" bzw. "neben" bezüglich der Rückenlehne 4 bzw. des Rückenlehnenunterteils 6 definiert werden.

Und mithilfe der Fahrzeughöhenerstreckung Z kann darüber hinaus bezüglich des Rückenlehnenverlängerungsteils 8 bzw. des Rückenlehnenoberteils 7 eine Position bzw. Lageveränderung "oben" bzw. "unten" bezüglich der Rückenlehne 4 bzw. des Rückenlehnenunterteils 6 definiert werden.

Die Gesamthöhe 9 erstreckt sich demzufolge in Richtung der Fahrzeughöhenerstreckung Z.

Das Rückenlehnenunterteil 6 ist mit einem Unterteilpolsterelement 10 mit äußeren Wangenbereichen 11 und 12 stärker konturiert ausgestaltet als ein Oberteilpolsterelement 13 des Rückenlehnenoberteils 7.

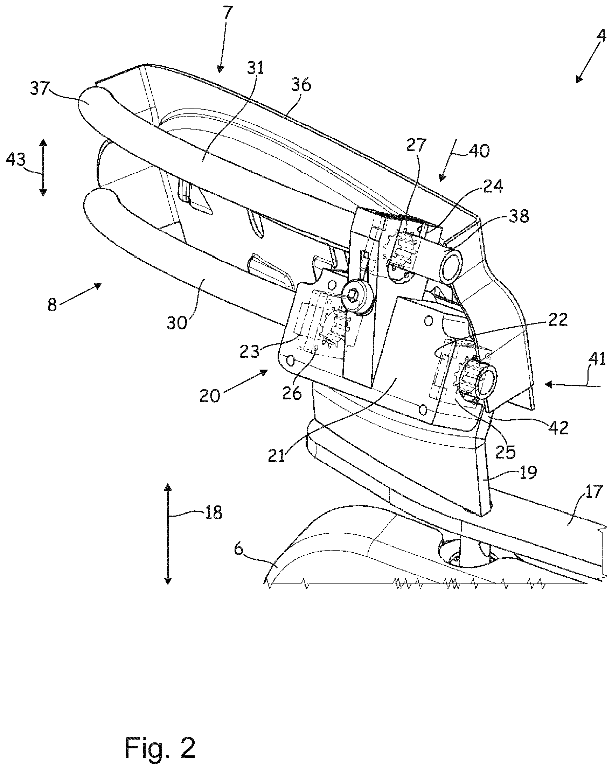

Das Rückenlehnenoberteil 7 ist in diesem Ausführungsbeispiel an dem Rückenlehnenunterteil 6 gehaltert; und zwar mittels einer Halteeinrichtung 15. Diese Halteeinrichtung 15 umfasst am Rückenlehnenunterteil 6 eine Aufnahmehalterung 16, in welche eine Einsteckhalterung 17 eingesteckt und entsprechend an der Aufnahmehalterung 16 gehaltert werden kann. Wie insbesondere aus der Darstellung gemäß der Figur 2 gut ersichtlich ist, umfasst die Einsteckhalterung 17 eine in vertikaler Richtung 18 ausgerichtete Winkelplatte 19, an welcher eine Lagereinrichtung 20 des Rückenlehnenverlängerungsteils 8 angeschraubt ist.

Die Lageeinrichtung 20 weist ein Gehäuse 21 aus Metall auf, welches insgesamt drei Lagersitze 22, 23 und 24 ausgestaltet, in welchen drei Gleitlagerbuchseneinheiten 25, 26 und 27 aus Kunststoff sitzen.

Mittels der Gleitlagerbuchseneinheiten 25 und 26 wird ein unteres längliches Traversenelement 30 des Rückenlehnenverlängerungsteils 8 an der Halteeinrichtung 15 gelagert. Mittels der dritten Gleitlagerbuchseneinheit 27 wird ein weiteres längliches Traversenelement 31 des Rückenlehnenverlängerungsteils 8 ebenfalls an der Halteeinrichtung 15 gelagert.

Die beiden länglichen Traversenelemente 30 und 31 verlaufen quer zur Rückenlehne 4 und über eine weite Strecke im Wesentlichen parallel zueinander, sie sind jedoch streckenweise auch unterschiedlich stark gekrümmt.

Insofern gestalten die zwei Gleitlagerbuchseneinheiten 25 und 26 eine erste axiale Schiebeachse 33 und die dritte Gleitlagerbuchseneinheit 27 eine zweite axiale Schiebeachse 34 aus, welche quer zur Rückenlehne 4 verlaufen.

Somit kann das Rückenlehnenverlängerungsteil 8 insgesamt entlang einer quer zu der Rückenlehne 4 verlaufenden gekrümmten Verlagerungsbahn 35 (siehe Figur 1) verschoben werden.

Hierdurch ist es möglich, dass das Rückenlehnenverlängerungsteil 8 nicht nur seitlich über den linken Seitenwangenbereich 12 des Rückenlehnenunterteils 6 hinaus geschoben werden kann, sondern hierbei noch in Richtung der Fahrzeuglängserstreckung X um eine Vertikalachse nach vorne gedreht und dabei bezogen auf die Fahrzeuglängserstreckung X zusätzlich noch um eine Horizontalachse nach hinten gekippt werden kann.

Die beiden länglichen Traversenelemente 30 und 31 sind hierbei an einem Rahmenteil 36 des Rückenlehnenverlängerungsteils 8 mit ihren jeweiligen beiden Endebereichen 37 bzw. 38 (hier nur hinsichtlich des weiteren länglichen Traversenelements 31 beziffert) angeschweißt. Somit sind die beiden länglichen Traversenelemente 30 und 31 mit dem Rahmenteil 36 des Rückenlehnenverlängerungsteils 8 unlösbar verbunden, wodurch an dem Rückenlehnenverlängerungsteil 8 eine hohe Festigkeit und hohe Formstabilität gewährleistet werden kann.

Während die dritte Gleitlagerbuchseneinheit 27 in dem dritten Lagersitz 24 lose von oben eingesteckt angeordnet ist, sind die beiden Gleitlagerbuchseneinheiten 25 und 26 dagegen aus einer quer zu der Einsteckeinrichtung 40 verlaufenden Einsteckeinrichtung 41 in den ersten Lagersitz 22 bzw. in den zweiten Lagersitz 23 eingesteckt.

Die Gleitlagerbuchseneinheiten 25 und 26 werden in ihrem jeweiligen Gleitlagersitz 22 bzw. 23 festgelegt, indem das Gehäuse 21 der Lagereinrichtung 20 an den oberen Schenkel 42 der Winkelplatte 19 angeschraubt wird.

Insofern sind die Gleitlagerbuchseneinheiten 25 und 26 in ihrem jeweiligen Lagersitz 22 bzw. 23 festgelegt, während die dritte Gleitlagerbuchseneinheit 27 in dem dritten Lagersitz 24 gegenüber der zweiten axialen Schiebeachse 34 radial verschieblich gehaltert ist.

Hierdurch gelingt auf konstruktiv besonders einfache Weise hinsichtlich der beiden Gleitlagerbuchseneinheiten 25 und 26 gegenüber der dritten Gleitlagerbuchseneinheit 27 ein Höhenausgleich bezüglich der doch unterschiedlich gekrümmten länglichen Traversenelemente 30 und 31.

Um die Bauhöhe des dritten Lagersitzes 24 geringer zu halten als die Bauhöhe der Lagersitze 22 und 23, ist die dritte Gleitlagerbuchseneinheit 27 gegenüber den beiden anderen Gleitlagerbuchseneinheiten 25 und 26 um 90° verdreht in den dritten Lagersitz 24 eingebaut.

Um die Gleitlagerbuchseneinheiten 25, 26 und 27 besonders einfach und kostengünstig herstellen zu können, sind sie identisch ausgestaltet. Somit ist es möglich, die Lagereinrichtung 20 insgesamt mit drei identischen Gleitlagerbuchseneinheiten 25, 26 und 27 auszurüsten, sodass auch die Lagersitze 22, 23 und 24 bis auf ihre jeweilige Lage im Raum 44 insgesamt und im speziellen an der Lagereinrichtung 20 ebenfalls identisch ausgestaltet sind. Hierdurch vereinfacht sich der Aufbau der Lagereinrichtung 20 enorm.

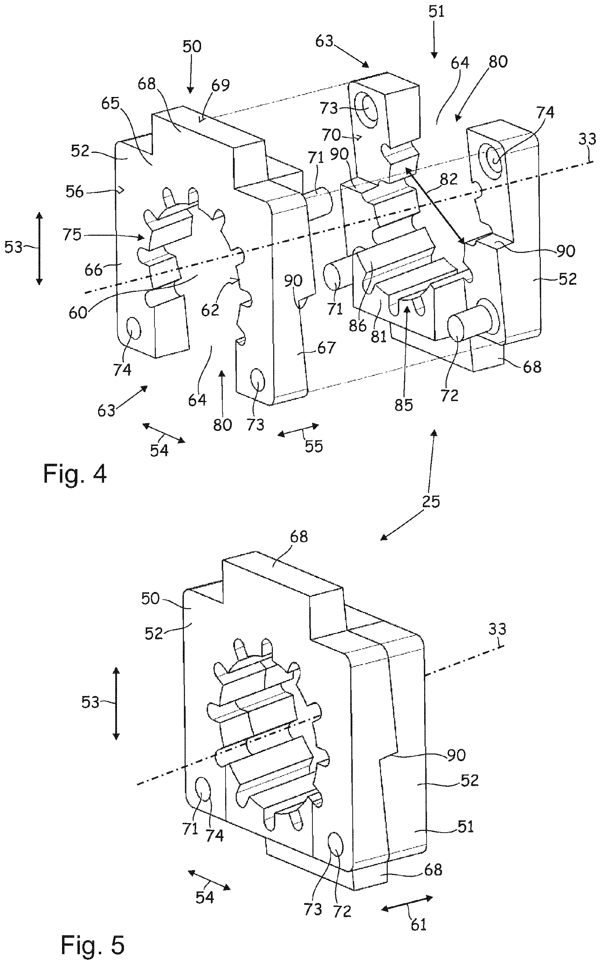

Der Aufbau bzw. die Herstellung der Gleitlagerbuchseneinheiten 25, 26 und 27 gestaltet sich darüber hinaus außerordentlich einfach, da jede der Gleitlagerbuchseneinheiten 25, 26 und 27 aus zwei identisch bauenden asymmetrischen Gleitbuchsenteilen 50 und 51 zusammen gesetzt sind, wie sehr gut mit den Darstellungen gemäß der Figuren 4 und 5 gezeigt ist.

Diese Gleitbuchsenteile 50 und 51 sind identisch ausgestaltet, sodass mit einem einzigen Bauteil alle Gleitlagerbuchseneinheiten 25, 26 und 27 zusammen gefügt werden können.

Damit die Gleitbuchsenteile 50 und 51 funktional hochwertig die jeweilige Gleitlagerbuchseneinheit 25, 26 und 27 ausgestalten können, weißt das jeweilige Gleitbuchsenteil 50 bzw. 51 ein einziges asymmetrisches plattenförmiges Grundkörperelement 52 auf.

An dieser Stelle sei explizit erwähnt, dass alle das asymmetrische plattenförmige Grundkörperelement 52 betreffenden Merkmale auch jeweils auf die identisch bauenden asymmetrischen Gleitbuchsenteile 50 und 51 zutreffen und umgekehrt.

Das asymmetrische plattenförmige Grundkörperelement 52, und damit auch jedes der identisch bauenden asymmetrischen Gleitbuchsenteile 50 und 51, weisen eine Längserstreckung 53 und eine Breitenerstreckung 54 auf, welche jeweils quer zu der jeweiligen Schiebeachse 33 bzw. 34 der entsprechenden Gleitlagerbuchseneinheit 25 und 26 bzw. 27 verlaufen.

Darüber hinaus weist das plattenförmige Grundkörperelement 50 eine Tiefenerstreckung 55 auf, welche in Richtung der jeweiligen Schiebeachse 33 bzw. 34 der entsprechenden Gleitlagerbuchseneinheit 25 und 26 bzw. 27 verläuft, also im Wesentlichen mit den diesbezüglichen Schiebeachsen 33 bzw. 34 fluchtend verläuft.

Hierbei ist die Tiefenerstreckung 55 um ein vielfaches geringer als die Längserstreckung 53 oder die Breitenerstreckung 54.

In diesem konkreten Ausführungsbeispiel ist die Tiefenerstreckung 55 um das 6-fache geringer als die Längserstreckung 53 und immerhin noch um das 4-fache geringer als die Breitenerstreckung 54.

Hierdurch gelingt es, die Gleitlagerbuchseneinheiten 25, 26 und 27 insgesamt in Richtung der Schiebeachse 33 bzw. 34 sehr schmal zu bauen und dennoch genügend große äußere Lagerflächen 56 am asymmetrischen plattenförmigen Grundkörperelement 52 gegenüber dem jeweiligen Lagersitz 22, 23 oder 24 auszugestalten.

Andererseits gelingt es mit dieser geringen Tiefenerstreckung 55 und den dadurch in Richtung der Schiebeachsen 33 bzw. 34 auch sehr schmal bauenden Gleitlagerbuchseneinheiten 25, 26 und 27 wenig Bauraum zu beanspruchen, sodass der hierdurch gewonnene Bauraum für eine möglichst lange Verlagerungsstrecke (hier nicht eingezeichnet) an der gekrümmten Verlagerungsbahn 35 für das Rückenlehnenverlängerungsteil 8 verwendet werden kann.

Das asymmetrische plattenförmige Grundkörperelement 52 zeichnet sich darüber hinaus durch eine Gleitlageröffnung 60 aus, welche bezogen auf die äußeren Lagerflächen 56 das asymmetrische plattenförmige Grundkörperelement 52 schräg durchdringt.

Insofern verlaufen auch die beiden Schiebeachsen 33 bzw. 34 schräg durch die jeweiligen Gleitlagerbuchseneinheiten 25, 26 und 27.

Somit durchläuft die jeweilige Schiebeachse 33, 34 auch das asymmetrische plattenförmige Grundkörperelement 52 und dementsprechend auch die hierdurch ausgestalteten Gleitlagerbuchseneinheiten 25, 26 und 27 schräg zur Tiefenerstreckung 55 des asymmetrischen plattenförmigen Grundkörperelements 52 und damit auch schräg zur diesbezüglichen Tiefengesamterstreckung 61 der jeweiligen Gleitlagerbuchseneinheit 25, 26 und 27.

Durch die Gleitlageröffnung 60 ist in dem asymmetrischen plattenförmigen Grundkörperelement 52 und damit, wie eingangs bereits erläutert, auch an dem jeweiligen asymmetrischen Gleitbuchsenteil 50 bzw. 51 eine Gleitlagerstruktur 62 ausgestaltet.

Aufgrund der vorstehend erläuterten schräg angeordneten Gleitlageröffnung 60 innerhalb des asymmetrischen plattenförmigen Grundkörperelements 52 ist diese Gleitlagerstruktur 62 ebenfalls im jeweiligen asymmetrischen Gleitbuchsenteil 50 bzw. 51 und damit auch in der jeweiligen Gleitlagerbuchseneinheit 25, 26 bzw. 27 schräg angeordnet. Mit anderen Worten die in der asymmetrischen Gleitlagerbuchse 50 bzw. 51 ausgebildete Gleitlagerstruktur 62 durchdringt die jeweilige Gleitlagerbuchseneinheit 25, 26 bzw. 27 ebenfalls schräg.

Damit die asymmetrischen Gleitbuchsenteile 50 und 51 nachträglich überhaupt noch an die fest mit dem Rahmenteil 36 verschweißten länglichen Traversenelemente 30 und 31 angebracht werden können, ist die Gleitlagerstruktur 62 bezogen auf die jeweilige Schiebeachse 33 bzw. 34 radial zumindest teilweise geöffnet, wodurch sich an einer Kurzseite 63 des asymmetrischen plattenförmigen Grundkörperelements 52 eine entsprechende radiale Montageöffnung 64 zum radialen Montieren des jeweiligen asymmetrischen Gleitbuchsenteils 50 bzw. 51 auf eines der länglichen Traversenelemente 30 bzw. 31 befindet.

Insofern gestaltet das jeweilige asymmetrische Gleitbuchsenteil 50, 51 einen Teilbereich (hier nicht explizit beziffert) der Gleitlagerstruktur 62 der jeweiligen Gleitlagerbuchseneinheit 25, 26 und 27 auf, welche bezogen auf die jeweilige Schiebeachse 33 bzw. 34 radial teilweise geöffnet ist.

Das asymmetrische plattenförmige Grundkörperelement 52 ist insofern u-förmig ausgestaltet und es weist hierbei einen Basiskörperbereich 65 und zwei sich daran anschließende Schenkelkörperbereiche 66 und 67, die sich gegenüber liegen, auf.

Am Basiskörperbereich 65 ist noch ein radial zur jeweiligen Schiebeachse 33 bzw. 34 abstehender Montagezapfenelement 68 vorgesehen bzw. an dem asymmetrischen plattenförmigen Grundkörperelement 52 ausgeformt, welcher in eine entsprechende Ausnehmung (hier nicht gezeigt) eines der Lagersitze 22, 23 bzw. 24 eingesteckt werden kann, wodurch die jeweilige Gleitlagerbuchseneinheit 25, 26 bzw. 27 noch einen festeren Sitz in dem jeweiligen Lagersitz 22, 23 bzw. 24 erfährt. Dies wird noch verstärkt, da das Montagezapfenelement 68 von seiner Kopfseite 69 aus auf den Basiskörperbereich 65 zu konisch verläuft.

Zwei asymmetrische plattenförmige Grundkörperelemente 52 bzw. zwei asymmetrische Gleitbuchsenteile 50 und 51 können besonders formstabil zu der jeweiligen Gleitlagerbuchseneinheit 25, 26 und 27 zusammengefügt werden, da das asymmetrische plattenförmige Grundkörperelement 52 an seiner Vorderseite bzw. Montageseite 70 zwei Montagestegelemente 71 und 72 aufweist.

Diese beiden Montagestegelemente 71 und 72 befinden sich am Basiskörperbereich 65.

An den freien Enden der jeweiligen Schenkelkörperbereiche 66 bzw. 67 befinden sich entsprechende Montagebohrungen 73 und 74, in welche die Montagestegelemente 71 und 72 jeweils eingeführt werden können, wenn die beiden asymmetrischen Gleitbuchsenteile 50 und 51 zusammengefügt werden.

Darüber hinaus ist das jeweilige asymmetrische Gleitbuchsenteil 50 bzw. 51 am Umfang 75 der Gleitlagerstruktur 62 einerseits mit einer Gleitlagerstrukturlücke 80 und andererseits mit einem Lückenfüllelement 81 zum Verschließen einer Gleitlagerstrukturlücke 80 eines mit dem asymmetrischen Gleitbuchsenteil 50 korrespondierenden weiteren asymmetrischen Gleitbuchsenteils 51 ausgestattet.

Hierbei sind die Gleitlagerstrukturlücke 80 und das Lückenfüllelement 81 durch den Durchmesser 82 der Gleitlageröffnung 60 voneinander beabstandet angeordnet.

Das Lückenfüllelement 81 steht hierbei über die Montageseite 70 hervor, sodass im montierten Zustand der jeweiligen Gleitlagerbuchseneinheit 25, 26 bzw. 27 das Lückenfüllelement 81 des Gleitbuchsenteils 50 in die Gleitlagerstrukturlücke 80 des korrespondierenden Gleitbuchsenteils 51 und umgekehrt eingreift und dieses jeweils derart verschließt, dass sich eine radial vollständig geschlossene Gleitlagerstruktur 62 an der jeweiligen Gleitlagerbuchseneinheit 25, 26 bzw. 27 ergibt.

Um die Reibwiderstände zwischen den Gleitlagerbuchseneinheiten 25, 26 und 27 und den länglichen Traverseneinheiten 30 bzw. 31 gut reduzieren zu können, weist die Gleitlagerstruktur 62 eine Innengleitverzahnung 85 mit Gleitlagerzähnen 86 (hier nur exemplarisch beziffert) auf. Somit kann gewährleistet werden, dass die jeweilige Gleitlagerbuchseneinheit 25, 26 und 27 lediglich mit ihren Gleitlagerzähnen 86 mit dem jeweiligen länglichen Traversenelement 30 bzw. 31 in Wirkkontakt kommt, wobei eine geringere Reibfläche zwischen den Gleitlagerbuchseneinheiten 25, 26 bzw. 27 und den länglichen Traverseneinheiten 30 bzw. 31 besteht.

Um nun die beiden asymmetrischen Gleitbuchsenteile 50 und 51 zu den jeweiligen Gleitlagerbuchseneinheiten 25, 26 bzw. 27 zusammenfügen zu können, werden die beiden asymmetrischen Gleitbuchsenteile 50 und 51 jeweils auf eine der länglichen Traversenelemente 30 bzw. 31 radial aufgesteckt.

Anschließend werden die beiden asymmetrischen Gleitbuchsenteile 50 bzw. 51, wie gemäß der Darstellung nach der Figur 4 gezeigt ist, derart um die axiale Schiebeachse 33 bzw. 34 bzw. um das jeweilige längliche Traversenelement 30 bzw. 31 gedreht, dass das zweite asymmetrische Gleitbuchsenteil 50 gegenüber dem ersten asymmetrischen Gleitbuchsenteil 50 um 180° verdreht ist.

Somit liegen die beiden asymmetrischen Gleitbuchsenteile 50 bzw. 51 sich mit ihrer jeweiligen Montageseite 70 nur um 180° verdreht gegenüber und können nun aufeinander zu bewegt und hierbei zusammengefügt werden.

Hierbei werden einerseits das Lückenfüllelement 81 in die Gleitlagerstrukturlücke 80 und andererseits die jeweiligen Montagestegelemente 71 bzw. 72 in die jeweils korrespondierende Montagebohrung 73 bzw. 74 eingesteckt.

Die beiden asymmetrischen Gleitbuchsenteile 50 und 51 werden hinsichtlich ihrer Längserstreckung 53 noch durch Spannflächen 90 (nur explizit beziffert) miteinander verspannt, sodass beide asymmetrischen Gleitbuchsenteile 50 bzw. 51 als Gleitlagerbuchseneinheit 25, 26 oder 27 fest miteinander verbunden sind, wie gemäß der Darstellung nach der Figur 5 gezeigt.

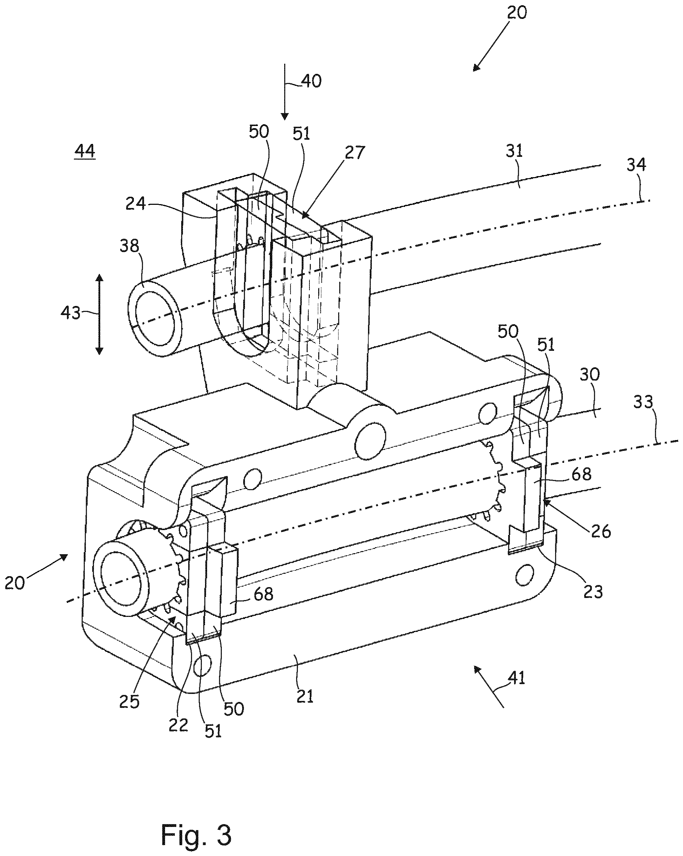

Selbst eine gebogene axiale Schiebeachse 33 kann mittels einer einzigen identischen Gleitlagerbuchseneinheit 25, 26 bzw. 27 erzielt werden, wenn zwei die gemeinsame Schiebeachse 33 formulierende Gleitlagerbuchseneinheiten 25 und 26 spiegelverkehrt in den Lagersitzen 22 bzw. 23 der Lagereinrichtung 20 angeordnet sind, wie dies insbesondere aus der Darstellung nach der Figur 3 gut zu erkennen ist.

Es versteht sich, dass es sich bei dem vorstehend erläuterten Ausführungsbeispiel lediglich um eine erste Ausgestaltung des Fahrzeugsitzes mit den erfindungsgemäßen Gleitlagerbuchseneinheiten handelt. Insofern beschränkt sich die Ausgestaltung der Erfindung nicht auf dieses Ausführungsbeispiel.

### Bezugszeichenliste

- 1: Fahrzeugsitz
- 2: Nutzkraftfahrzeugsitz
- 3: landwirtschaftlich genutztes Nutzkraftfahrzeugsitz
- 4: Rückenlehne
- 5: Längserstreckung
- 6: Rückenlehnenunterteil
- 7: Rückenlehnenoberteil
- 8: Rückenlehnenverlängerungsteil
- 9: Gesamthöhe
- 10: Unterteilpolsterelement
- 11: rechter Seitenwangenbereich
- 12: linker Seitenwangenbereich
- 13: Oberteilpolsterelement
- 15: Halteeinrichtung
- 16: Aufnahmehalterung
- 17: Einsteckhalterung
- 18: vertikale Richtung
- 19: Winkelplatte
- 20: Lagereinrichtung
- 21: Gehäuse
- 22: erster Lagersitz
- 23: zweiter Lagersitz
- 24: dritter Lagersitz
- 25: erste Gleitlagerbuchseneinheit
- 26: zweite Gleitlagerbuchseneinheit
- 27: dritte Gleitlagerbuchseneinheit
- 30: erstes längliches Traversenelement
- 31: weiteres längliches Traversenelement
- 33: erste axiale Schiebeachse
- 34: zweite axiale Schiebeachse
- 35: gekrümmte Verlagerungsbahn
- 36: Rahmenteil
- 37: erste Endbereiche
- 38: zweite Endbereiche
- 40: Einsteckrichtung
- 41: quer verlaufende Einsteckrichtung
- 42: oberer Schenkel
- 43: Höhenausgleich
- 44: Raumlage
- 50: erstes asymmetrisches Gleitbuchsenteil
- 51: zweites asymmetrisches Gleitbuchsenteil
- 52: asymmetrisches plattenförmiges Grundkörperelement
- 53: Längserstreckung
- 54: Breitenerstreckung
- 55: Tiefenerstreckung
- 56: äußere Lagerflächen
- 60: Gleitlageröffnung
- 61: Tiefengesamterstreckung
- 62: Gleitlagerstruktur
- 63: Kurzseite
- 64: Montageöffnung
- 65: Basiskörperbereich
- 66: erster Schenkelkörperbereich
- 67: zweiter Schenkelkörperbereich
- 68: Montagezapfenelement
- 69: Kopfseite
- 70: Montageseite
- 71: erstes Montagestegelement
- 72: zweites Montagestegelement
- 73: erste Montagebohrung
- 74: zweite Montagebohrung
- 75: Umfang
- 80: Gleitlagerstrukturlücke
- 81: Lückenfüllelement
- 82: Durchmesser
- 85: Innengleitlagerverzahnung
- 86: Gleitlagerzahn
- 90: Spannflächen
- X: Fahrzeuglängserstreckung
- Y: Fahrzeugbreitenerstreckung
- Z: Fahrzeughöhenerstreckung

## Patentansprüche

1. Fahrzeugsitz (1, 2) mit einem Sitzteil, mit einer Rückenlehne (4), unterteilt in ein Rückenlehnenunterteil (6) und in ein darüber angeordnetes Rückenlehnenoberteil (7) in Gestalt eines Rückenlehnenverlängerungsteils (8), und mit einer Lagereinrichtung (20) zum Lagern des Rückenlehnenverlängerungsteils (8), insbesondere des Rückenlehnenoberteils (7), gegenüber dem Rückenlehnenunterteil (6) der Rückenlehne (4) des Fahrzeugsitzes (1, 2),
**dadurch gekennzeichnet, dass**
die Lagereinrichtung (20) mehrere Gleitlagerbuchseneinheiten (25, 26, 27) zum Lagern von länglichen Traversenelementen (30, 31) des Rückenlehnenverlängerungsteils (8) entlang von quer zur Rückenlehne (4) angeordneten Schiebeachsen (37, 38) aufweist, wobei die Gleitlagerbuchseneinheiten (25, 26, 27) jeweils aus mindestens zwei identisch bauenden asymmetrischen Gleitbuchsenteilen (50, 51) zusammengesetzt sind.

2. Fahrzeugsitz (1,2) nach Anspruch 1,
**dadurch gekennzeichnet, dass**
das jeweilige asymmetrische Gleitbuchsenteil (50, 51) eine bezogen auf die Schiebeachse (33, 34) radial teilweise geöffnete Gleitlagerstruktur (62) aufweist.

3. Fahrzeugsitz (1, 2) nach Anspruch 1 oder 2,
**dadurch gekennzeichnet, dass**
das jeweilige asymmetrische Gleitbuchsenteil (50, 51) eine radiale Montageöffnung (64) zum radialen Montieren des asymmetrischen Gleitbuchsenteils (50, 51) auf eines der länglichen Traversenelemente (30, 31) aufweist.

4. Fahrzeugsitz (1, 2) nach einem der Ansprüche 1 bis 3,
**dadurch gekennzeichnet, dass**
das jeweilige asymmetrische Gleitbuchsenteil (50, 51) einen Teilbereich einer Gleitlagerstruktur (62) der Gleitlagerbuchseneinheit (25, 26, 27) ausgestaltet, welche bezogen auf die Schiebeachse (33, 34) radial teilweise geöffnet ist.

5. Fahrzeugsitz (1, 2) nach einem der Ansprüche 1 bis 4,
**dadurch gekennzeichnet, dass**
das jeweilige asymmetrische Gleitbuchsenteil (50, 51) einen Teilbereich einer Gleitlagerstruktur (62) der Gleitlagerbuchseneinheit (25, 26, 27) ausgestaltet, welche an ihrem Umfang (75) einerseits eine Gleitlagerstrukturlücke (80) und andererseits ein Lückenfüllelement (81) zum Verschließen einer Gleitlagerstrukturlücke (80) eines mit dem asymmetrischen Gleitbuchsenteil (50) korrespondierenden weiteren asymmetrischen Gleitbuchsenteils (51) einer gemeinsamen Gleitlagerbuchseneinheit (25, 26, 27) aufweist.

6. Fahrzeugsitz (1, 2) nach Anspruch 5,
**dadurch gekennzeichnet, dass**
die Gleitlagerstrukturlücke (80) und das Lückenfüllelement (81) durch den Durchmesser (82) einer Gleitlageröffnung (60) voneinander beabstandet angeordnet sind.

7. Fahrzeugsitz (1, 2) nach einem der Ansprüche 1 bis 6,
**dadurch gekennzeichnet, dass**
eine in der asymmetrischen Gleitlagerbuchse (50, 51) ausgebildete Gleitlagerstruktur (die Gleitlagerbuchseneinheit (25, 26, 27) schräg durchdringt.

8. Fahrzeugsitz (1,2) nach einem der Ansprüche 1 bis 4,
**dadurch gekennzeichnet, dass**
die Schiebeachse (33, 34) die Gleitlagerbuchseneinheit (25, 26, 27) schräg durchdringt.

9. Fahrzeugsitz (1, 2) nach einem der Ansprüche 1 bis 4,
**dadurch gekennzeichnet, dass**
die Schiebeachse (33, 34) die Gleitlagerbuchseneinheit (25, 26, 27) schräg zur Tiefengesamterstreckung (61) der Gleitlagerbuchseneinheit (25, 26, 27) verläuft.

10. Fahrzeugsitz (1, 2) nach einem der Ansprüche 1 bis 4,
**dadurch gekennzeichnet, dass**
die Gleitlagerstruktur (62) eine Innengleitlagerverzahnung (85) aufweist.

11. Fahrzeugsitz (1, 2) nach einem der Ansprüche 1 bis 5,
**dadurch gekennzeichnet, dass**
die Gleitlagerbuchseneinheit (25, 26, 27) aus zwei identisch bauenden asymmetrischen Gleitbuchsenteilen (50, 51) zusammengesetzt ist, wobei die mit ihren identisch ausgestalteten Seite (70) aufeinander zu ausgerichtet sind.

12. Fahrzeugsitz (1, 2) nach einem der Ansprüche 1 bis 4,
**dadurch gekennzeichnet, dass**
das asymmetrische Gleitbuchsenteil (50, 51) ein plattenförmiges Grundkörperelement (52) umfasst, dessen Längenerstreckung (53) und Breitenerstreckung (54) quer zur Schiebeachse (33, 34) der Gleitlagerbuchseneinheit (25, 26, 27) verlaufen.

13. Fahrzeugsitz (1, 2) nach einem der Ansprüche 1 bis 4,
**dadurch gekennzeichnet, dass**
das asymmetrische Gleitbuchsenteil (50, 51) ein plattenförmiges Grundkörperelement (52) umfasst, dessen Tiefenerstreckung (55) fluchtend zur Schiebeachse (33, 34) der Gleitlagerbuchseneinheit (25, 26, 27) verläuft.

14. Fahrzeugsitz (1, 2) nach einem der Ansprüche 1 bis 12,
**dadurch gekennzeichnet, dass**
wenigstens eine (27) der Gleitlagerbuchseneinheiten (25, 26, 27) radial verschieblich zur Schiebeachse (33, 34) in einem Lagersitz (24) der Lagereinrichtung (20) angeordnet ist.

15. Fahrzeugsitz (1, 2) nach einem der Ansprüche 1 bis 4,
**dadurch gekennzeichnet, dass**
eine radial neben einer durch die zwei Gleitlagerbuchseneinheiten (25, 26) formulierte gemeinsamen Schiebeachse (33) angeordnete dritte Gleitlagerbuchseneinheit (27) um 90° verdreht in einem weiteren Lagersitz (24) der Lagereinrichtung (20) angeordnet ist.

16. Fahrzeugsitz (1, 2) nach einem der Ansprüche 1 bis 13,
**dadurch gekennzeichnet, dass**
zwei eine gemeinsame Schiebeachse (33) formulierende Gleitlagerbuchseneinheiten (25, 26) spiegelverkehrt in Lagersitzen (22, 23) der Lagereinrichtung (20) angeordnet sind.

17. Fahrzeugsitz (1, 2) nach einem der Ansprüche 1 bis 14,
**dadurch gekennzeichnet, dass**
eine radial neben der durch die zwei Gleitlagerbuchseneinheiten (25, 26) formulierte gemeinsame axiale Schiebeachse (33) angeordnete dritte Gleitlagerbuchseneinheit (27) zwischen den zwei Gleitlagerbuchseneinheiten (25, 26) angeordnet ist, welche eine weitere axiale Schiebeachse (34) formuliert.

18. Fahrzeugsitz (1, 2) nach einem der Ansprüche 1 bis 16,
**dadurch gekennzeichnet, dass**
das asymmetrische Gleitbuchsenteil (50, 51) an einer mit einem weiteren asymmetrischen Gleitbuchsenteil (50, 51) korrespondierenden Montageseite (70) wenigstens ein Montagestegelement (71, 72) aufweist, welches zum Ausbilden der Gleitlagerbuchseneinheit (25, 26, 27) in eine Montagebohrung (73, 74) des weiteren asymmetrischen Gleitbuchsenteils (50, 51) einsteckbar ist.

19. Fahrzeugsitz (1, 2) nach Anspruch18,
**dadurch gekennzeichnet, dass**
das Montagestegelement (71, 72) und das Lückenfüllelement (81) an der selben Gleitbuchsenteilseite (70) angeordnet sind.

20. Nutzkraftfahrzeug (3), insbesondere landwirtschaftliches Nutzkraftfahrzeug, mit wenigstens einem Fahrzeugsitz (1, 2),
**gekennzeichnet, durch**
einen Fahrzeugsitz (1) nach einem der vorhergehenden Ansprüche.

## Claims

1. Vehicle seat (1, 2) comprising a seat part, a backrest (4) which is subdivided into an lower backrest part (6) and an upper backrest part (7) arranged above said lower part in the form of a backrest extension part (8), and comprising a bearing device (20) for bearing the backrest extension part (8), in particular the upper backrest part (7), relative to the lower backrest part (6) of the backrest (4) of the vehicle seat (1, 2),
**characterised in that**
the bearing device (20) comprises a plurality of slide bearing bush units (25, 26, 27) for bearing elongate crossarm elements (30, 31) of the backrest extension part (8) along sliding axes (37, 38) arranged transversely to the backrest (4), the slide bearing bush units (25, 26, 27) each being assembled from at least two identically designed asymmetrical slide bush parts (50, 51).

2. Vehicle seat (1, 2) according to claim 1,
**characterised in that**
each of the asymmetrical slide bush parts (50, 51) has a slide bearing structure (62) that is partially open radially relative to the sliding axis (33, 34).

3. Vehicle seat (1, 2) according to either claim 1 or claim 2,
**characterised in that**
each of the asymmetrical slide bush parts (50, 51) comprises a radial mounting opening (64) for radially mounting the asymmetrical slide bush part (50, 51) on one of the elongate crossarm elements (30, 31).

4. Vehicle seat (1, 2) according to any of claims 1 to 3,
**characterised in that**
each of the asymmetrical slide bush parts (50, 51) forms a portion of a slide bearing structure (62) of the slide bearing bush unit (25, 26, 27), which is partially open radially relative to the sliding axis (33, 34).

5. Vehicle seat (1, 2) according to any of claims 1 to 4,
**characterised in that**
each of the asymmetrical slide bush parts (50, 51) forms a portion of a slide bearing structure (62) of the slide bearing bush unit (25, 26, 27), which structure has, on its circumference (75), a slide bearing structure gap (80) on one side and a gap filling element (81) on the other side for closing a slide bearing structure gap (80) in an additional asymmetrical slide bush part (51) that corresponds to the asymmetrical slide bush part (50) and is part of a common slide bearing bush unit (25, 26, 27).

6. Vehicle seat (1, 2) according to claim 5,
**characterised in that**
the slide bearing structure gap (80) and the gap filling element (81) are spaced apart from one another by the diameter (82) of a slide bearing opening (60).

7. Vehicle seat (1, 2) according to any of claims 1 to 6,
**characterised in that**
a slide bearing structure formed in the asymmetrical slide bearing bush (50, 51) passes obliquely through the slide bearing bush unit (25, 26, 27).

8. Vehicle seat (1, 2) according to any of claims 1 to 4,
**characterised in that**
the sliding axis (33, 34) passes obliquely through the slide bearing bush unit (25, 26, 27).

9. Vehicle seat (1, 2) according to any of claims 1 to 4,
**characterised in that**
the sliding axis (33, 34) of the slide bearing bush unit (25, 26, 27) extends obliquely to the total depth extension (61) of the slide bearing bush unit (25, 26, 27).

10. Vehicle seat (1, 2) according to any of claims 1 to 4,
**characterised in that**
the slide bearing structure (62) comprises inner slide bearing toothing (85).

11. Vehicle seat (1, 2) according to any of claims 1 to 5,
**characterised in that**
the slide bearing bush unit (25, 26, 27) is assembled from two identically designed asymmetrical slide bush parts (50, 51), the identically formed sides (70) thereof being aligned with one another.

12. Vehicle seat (1, 2) according to any of claims 1 to 4,
**characterised in that**
the asymmetrical slide bush part (50, 51) comprises a planar main-body element (52), the longitudinal extension (53) of which and the width extension (54) of which are transverse to the sliding axis (33, 34) of the slide bearing bush unit (25, 26, 27).

13. Vehicle seat (1, 2) according to any of claims 1 to 4,
**characterised in that**
the asymmetrical slide bush part (50, 51) comprises a planar main-body element, the depth extension (55) of which is aligned with the sliding axis (33, 34) of the slide bearing bush unit (25, 26, 27).

14. Vehicle seat (1, 2) according to any of claims 1 to 12,
**characterised in that**
at least one (27) of the slide bearing bush units (25, 26, 27) is arranged so as to be radially slidable with respect to the sliding axis (33, 34) in a bearing seat (24) of the bearing device (20).

15. Vehicle seat (1, 2) according to any of claims 1 to 4,
**characterised in that**
a third slide bearing bush unit (27) arranged radially next to a common sliding axis (33) formed by the two slide bearing bush units (25, 26) is arranged in a manner rotated by 90° in an additional bearing seat (24) of the bearing device (20).

16. Vehicle seat (1, 2) according to any of claims 1 to 13,
**characterised in that**
two slide bearing bush units (25, 26) forming a common sliding axis (33) are arranged in a mirror-inverted manner in bearing seats (22, 23) of the bearing device (20).

17. Vehicle seat (1, 2) according to any of claims 1 to 14,
**characterised in that**
a third slide bearing bush unit (27) arranged radially next to the common axial sliding axis (33) formed by the two slide bearing bush units (25, 26) is arranged between the two slide bearing bush units (25, 26) and forms an additional axial sliding axis (34).

18. Vehicle seat (1, 2) according to any of claims 1 to 16,
**characterised in that**
the asymmetrical slide bush part (50, 51), on a mounting side (70) that corresponds to an additional asymmetrical slide bush part (50, 51), comprises at least one mounting web element (71, 72), which can be inserted into a mounting hole (73, 74) in the additional asymmetrical slide bush part (50, 51) in order to form the slide bearing bush unit (25, 26, 27).

19. Vehicle seat (1, 2) according to claim 18,
**characterised in that**
the mounting web element (71, 72) and the gap filling element (81) are arranged on the same side (70) of the slide bush part.

20. Commercial motor vehicle (3), in particular an agricultural commercial motor vehicle, comprising at least one vehicle seat (1, 2),
**characterised by**
a vehicle seat (1) according to any of the preceding claims.

## Revendications

1. Siège de véhicule (1, 2) avec une partie d'assise, avec un dossier (4), divisé en une partie inférieure de dossier (6) et en une partie supérieure de dossier (7), disposée au-dessus, se présentant sous la forme d'une partie de prolongement de dossier (8), avec un dispositif de palier (20) pour le logement de la partie de prolongement de dossier (8), plus particulièrement de la partie supérieure de dossier (7), par rapport à la partie inférieure de dossier (6) du dossier (4) du siège de véhicule (1, 2),
**caractérisé en ce que**
le dispositif de palier (20) comprend plusieurs unités de douilles de palier de glissement (25, 26, 27) pour le logement d'éléments de traverses longitudinaux (30, 31) de la partie de prolongement de dossier (8) le long d'axes de coulissement (37, 38) disposés transversalement par rapport au dossier (4), les unités de douilles de palier de glissement (25, 26, 27) étant constituées chacune au moins de deux parties de douilles de glissement (50, 51) identiques à structure asymétrique.

2. Siège de véhicule (1, 2) selon la revendication 1,
**caractérisé en ce que**
la partie de douille de glissement asymétrique (50, 51) présente une structure de palier de glissement (62) ouverte de manière partiellement radiale par rapport à l'axe de coulissement (33, 34).

3. Siège de véhicule (1, 2) selon la revendication 1 ou 2,
**caractérisé en ce que**
la partie de douille de glissement asymétrique (50, 51) correspondante présente une ouverture de montage radiale (64) pour le montage radial de la partie de douille de glissement (50, 51) asymétrique sur un des éléments de traverses longitudinaux (30, 31).

4. Siège de véhicule (1, 2) selon l'une des revendications 1 à 3,
**caractérisé en ce que**
la partie de douille de glissement asymétrique (50, 51) correspondante forme une zone partielle d'une structure de palier de glissement (62) de l'unité de douille de palier de glissement (25, 26, 27) qui est ouverte de manière partiellement radiale par rapport à l'axe de coulissement (33, 34).

5. Siège de véhicule (1, 2) selon l'une des revendications 1 à 4,
**caractérisé en ce que**
la partie de douille de glissement asymétrique (50, 51) correspondante forme une zone partielle d'une structure de palier de glissement (62) de l'unité de douille de palier de glissement (25, 26, 27), qui comprend, sur sa circonférence (75) d'une part, une espace dans la structure de palier de glissement (80) et d'autre part un élément de remplissage d'espace (81) pour l'obturation d'un espace dans la structure de palier de glissement (80) d'une partie de douille de palier asymétrique (51) supplémentaire, correspondant à la partie de douille de palier asymétrique (50), d'une unité de douille de palier de glissement (25, 26, 27) commune.

6. Siège de véhicule (1, 2) selon la revendication 5,
**caractérisé en ce que**
l'espace dans la structure du palier de glissement (80) et l'élément de remplissage d'espace (81) sont éloignés l'un de l'autre par le diamètre (82) d'une ouverture du palier de glissement (60).

7. Siège de véhicule (1, 2) selon l'une des revendications 1 à 6,
**caractérisé en ce que**
une structure de palier de glissement, formée dans la douille de palier de glissement (50, 51) traverse de manière oblique l'unité de douille de palier de glissement (25, 26, 27).

8. Siège de véhicule (1, 2) selon l'une des revendications 1 à 4,
**caractérisé en ce que**
l'axe de coulissement (33, 34) traverse de manière oblique l'unité de douille de palier de glissement (25, 26, 27).

9. Siège de véhicule (1, 2) selon l'une des revendications 1 à 4,
**caractérisé en ce que**
l'axe de coulissement (33, 34) traverse l'unité de douille de palier de glissement (25, 26, 27) de manière oblique par rapport à l'extension totale en profondeur (61) de l'unité de douille de palier de glissement (25, 26, 27).

10. Siège de véhicule (1, 2) selon l'une des revendications 1 à 4,
**caractérisé en ce que**
la structure de palier de glissement (62) comprend une denture de palier de glissement interne (85).

11. Siège de véhicule (1, 2) selon l'une des revendications 1 à 5,
**caractérisé en ce que**
l'unité de douille de palier de glissement (25, 26, 27) est constituée de deux parties de douilles de glissement asymétriques (50, 51) identiques, celles-ci étant orientées entre elles avec leur côté (70) conçu de manière identique.

12. Siège de véhicule (1, 2) selon l'une des revendications 1 à 4,
**caractérisé en ce que**
la partie de douille de glissement asymétrique (50, 51) comprend un élément de corps de base (52) en forme de plaque dont l'extension en longueur (53) et l'extension en largeur (54) s'étendent transversalement par rapport à l'axe de coulissement (33, 34) de l'unité de douille de palier de glissement (25, 26, 27).

13. Siège de véhicule (1, 2) selon l'une des revendications 1 à 4,
**caractérisé en ce que**
la partie de douille de glissement asymétrique (50, 51) comprend un élément de corps de base (52) en forme de plaque dont l'extension en profondeur (55) est alignée avec l'axe de coulissement (33, 34) de l'unité de douille de palier de glissement (25, 26, 27).

14. Siège de véhicule (1, 2) selon l'une des revendications 1 à 12,
**caractérisé en ce que**
au moins une (27) des unités de douilles de palier de glissement (25, 26, 27) est disposée de manière coulissante radialement par rapport à l'axe de coulissement (33, 34) sur un siège de palier (24) du dispositif de palier (20).

15. Siège de véhicule (1, 2) selon l'une des revendications 1 à 4,
**caractérisé en ce que**
une troisième unité de douille de palier de glissement (27), disposée radialement à côté d'un axe de coulissement (33) commun défini par les deux unités de douilles de palier de glissement (25, 26), est tournée de 90° dans un siège de palier (24) supplémentaire du dispositif de palier (20).

16. Siège de véhicule (1, 2) selon l'une des revendications 1 à 13,
**caractérisé en ce que**
deux unités de douilles de palier de glissement (25, 26) définissant un axe de coulissement (33) commun sont disposées avec une symétrie en miroir dans des sièges de palier (22, 23) du dispositif de palier (20).

17. Siège de véhicule (1, 2) selon l'une des revendications 1 à 14,
**caractérisé en ce que**
une troisième unité de douille de palier de glissement (27), disposée radialement à côté de l'axe de coulissement (33) commun défini par les deux unités de douilles de palier de glissement (25, 26), est disposée entre les deux unités de douilles de palier de glissement (25, 26), qui définit un axe de coulissement axial (34) supplémentaire.

18. Siège de véhicule (1, 2) selon l'une des revendications 1 à 16,
**caractérisé en ce que**
la partie de douille de glissement (50, 51) comprend, au niveau d'un côté de montage (70) correspondant à une partie de douille de glissement asymétrique (50, 51) supplémentaire, au moins un élément nervuré de montage (71, 72), qui peut être inséré dans un alésage de montage (73, 74) de la partie de douille de glissement asymétrique (50, 51) supplémentaire pour la formation de l'unité de douilles de palier de glissement (25, 26, 27).

19. Siège de véhicule (1, 2) selon la revendication 18,
**caractérisé en ce que**
l'élément nervuré de montage (71, 72) et l'élément de remplissage d'espace (81) sont disposés sur le même côté de partie de douille de glissement (70).

20. Véhicule utilitaire (3), plus particulièrement véhicule utilitaire agricole avec au moins un siège de véhicule (1, 2),
**caractérisé par**
un siège de véhicule (1) selon l'une des revendications précédentes.
